# EUROPEAN PATENT APPLICATION

(11) **EP 2 090 392 A1**
(43) Date of publication of application: **19.08.2009**
(21) Application number: 08738802.1
(22) Date of filing: 25.03.2008
(51) Int. Cl.: B23B 51/00, B23B 51/06

(54) **DEEP HOLE CUTTING APPARATUS**

(30) Priority: 02.04.2007 JP 2007096631
(71) Applicant: UNITAC, Incorporated, Amagasaki-shi, Hyogo 661-0033 (JP)
(72) Inventor: NOMURA, Takuji, Amagasaki-shi Hyogo 661-0033 (JP); SAKAI, Makoto, Amagasaki-shi Hyogo 661-0033 (JP)
(74) Representative: Vossius & Partner
(86) International application number: PCT/JP2008/055507
(87) International publication number: WO 2008/123221

(57) **Abstract**

Provided is a deep hole cutting apparatus having a guide pad brazed to a cutting head section. With the deep hole cutting apparatus, high machining accuracy can be obtained in a stable cutting status and the service life of the guide pad is lengthened. A guide pad (5) brazed to a cutting head section (10a) is diagonally arranged so that the leading end side of the tool is closer to the front side in a tool rotating direction (y) compared with the rear end side of the tool.

## Description

### [Technical Field]

The present invention relates to a cutting apparatus used for deep-hole drilling work, and in particular, a deep hole cutting apparatus brazed with a guide pad on an outer periphery of a cutting head portion.

### [Background Art]

A guide pad provided on an outer periphery of a cutting head portion in a deep hole cutting apparatus, in general, slidingly contacts with an inner circumference of a cutting hole during drilling, rendering an inner circumferential surface of the cutting hole receiving a cutting reaction force by a cutting blade. By a so-called burnishing action of keeping a physical relationship between the slidingly contacted area and the cutting blade constant all the time, the cutting head portion is maintained in a rotational state on a constant axis line without runout, thereby enhancing cutting accuracy. The guide pad also exhibits an action of crushing and smoothing unevenness on the inner circumference of the hole involved in cutting. A guide pad of this kind is sometimes integrally formed with the cutting head portion. In most cases, however, the guide pad is configured such that a tip made of a hard material such as cemented carbide, cermet and the like is brazed on or a similar tip is screwed to a pad mounting depression provided on the outer periphery of a cutting head portion made of steel. The brazed type guide pad is normally applied to a cutting head portion whose cutting blade is also brazed.

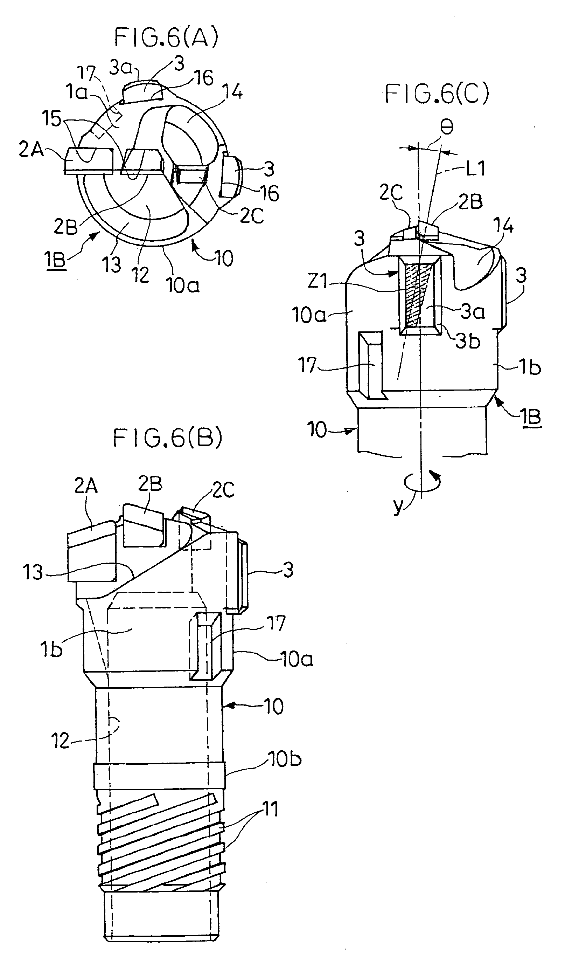

FIGS. 6A to 6C illustrate an example of a drill head in which guide pads and cutting blades are both brazed. In the drill head 1B, a cutting head portion 10a at a front side and a screw shank portion 10b at a rear side constitute a substantially cylindrical head body 10. The screw shank portion 10b is provided with a male thread 11 on an outer circumference thereof. The head body 10 has a hollow interior constituting a chip discharging passage 12 which is open to a rear end. The cutting head portion 10a has a distal end surface 1a provided with open chip discharging ports 13, 14 in large and small fan-shapes. The chip discharging ports 13, 14 are communicated with the cutting discharging passage 12. There are concavely provided three cutting blade mounting seats 15 along walls of the chip discharging ports 13, 14. Three cutting blades 2A to 2C of an outer peripheral side, central and intermediate ones composed of a hard material such as cemented carbide, cerment and the like are brazed on the cutting blade mounting seats 15, respectively. Two groove-shaped pad mounting depressions 16 along a head axis direction are concavely provided in respective locations on an outer peripheral surface 1b of the cutting head portion 10a. Guide pads 3 in a shape of a substantially thick strip are brazed on the pad mounting depressions 16, respectively. Chucking grooves 17 are formed in the opposed positions in a radial direction on the rear side of the outer peripheral surface of the cutting head portion 10a. An outer surface of each guide pad 3 is processed into a circular arc-shaped surface 3a by post-brazing grinding. The circular arc-shaped surface 3a extends along a cutting circle by the outer peripheral side cutting blade 2A and has a periphery provided with chamfering 3b.

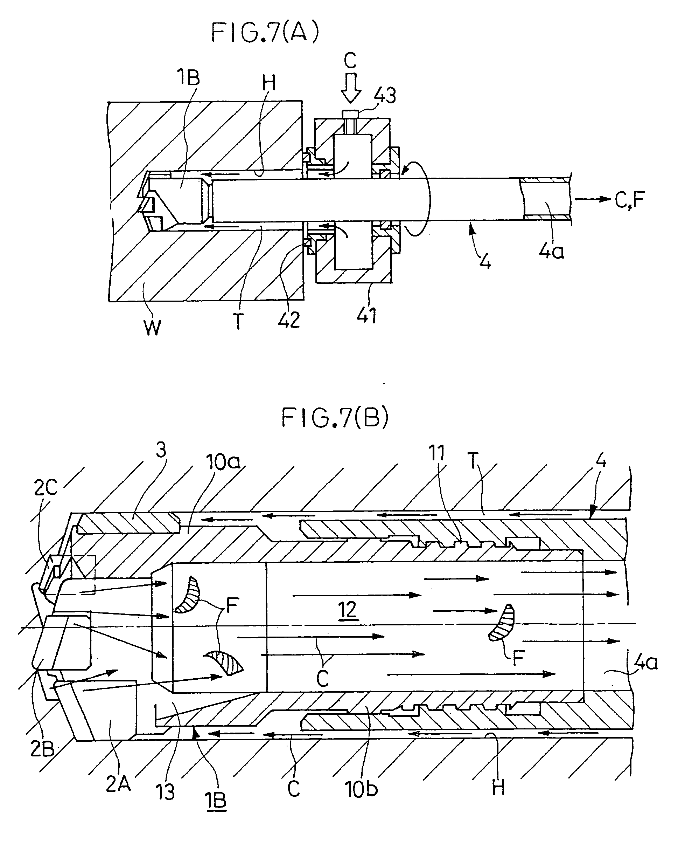

As shown in FIG 7A, cutting work is carried out by coupling a circular tubular tool shank (also referred to as a boring bar) 4 of a drill for deep-hole cutting to a spindle of a machine tool and rotatingly driving the tool shank 4 or rotating a work material W side reversely while the drill head 1B is coupled to a distal end of the tool shank 4 by threadedly inserting the screw shank portion 10b. A tool rotational direction hereinafter means a relative rotational direction of a tool side with respect to a work material W in the work, including the cutting work by rotational driving of the latter work material W side.

In this case, a coolant C is supplied in the manner of an external supply system. While a coolant supply jacket 41 encompassing the tool shank 4 oil-tight as shown is pressed contacted with the work material W via a seal ring 42, the coolant C is introduced from an introduction port 43 into the coolant supply jacket 41 under high pressure. The coolant C is then supplied to a distal end side of the drill head 1B through a gap T between an outer peripheral surface of the tool shank 4 and an inner circumferential surface of a cutting hole H. The coolant C flows into the chip discharging passage 12 from the chip discharging ports 13, 14 of the drill head 1B together with chips F produced in a cutting region, as shown in FIG. 7B. After that, the coolant C is discharged to the outside, passing a chip discharging passage 4a in the tool shank 4. During the cutting work, cutting reaction force is received on the inner circumferential surface of the cutting hole H by the guide pads 3 which slidingly contact with the inner circumference of the cutting hole H. Accordingly, the rotational state of the drill head 1B is maintained stable, and the inner circumference of the hole is smoothed.

### [Disclosure of the Invention]

### [Problems to be Solved by the Invention]

When abrasion patterns on the surface of the guide pad are examined in the stage of reaching a certain number of uses, in this kind of deep hole cutting apparatus, it has been found that the center of an abraded area is shifted further backward in a tool rotational direction apart from a tool distal end, in general. Thus, as shown in FIG. 6C, an abraded area Z1 shown by hatching in broken lines is biased backward in the tool rotational direction on the circular arc-shaped surface 3a of the guide pad 3 in the aforementioned conventional deep hole cutting apparatus. In the drawing, L1 denotes an abrasion center line and is inclined at an angle θ with respect to a tool axis direction L0.

The whole of the abraded area Z1 on the guide pad 3 corresponds to a slide contact area which renders the inner circumference of the cutting hole H receiving a cutting reaction force. Accordingly, the guide pad 3 as a whole unequally press contacts with the inner circumferential surface of the cutting hole H under circumstances where the abraded area Z1 is biased on the circular arc-shaped surface 3a. Stress by the pressed contact is turned toward a direction away from the tool center. This results in destabilizing a cutting state and reducing working accuracy. Furthermore, the unequal abrasion shortens the service life of the guide pad 3 itself.

The present invention was made in view of the foregoing circumstances, and accordingly an object of the present invention is to provide a deep hole cutting apparatus brazed with a guide pad on a cutting head portion and being capable of obtaining high working accuracy in stable cutting states and also extending the service life of the guide pad.

### [Means for Solving the Problems]

In order to achieve the aforementioned obj ect, a first aspect of the present invention, described with reference symbols in the drawings, is configured such that in a deep hole cutting apparatus provided with a guide pad 5 which is brazed on an outer periphery of a cutting head portion 10a and slidingly contacts to an inner circumference of a cutting hole H, the guide pad 5 is slantingly arranged in such a manner that a tool distal end side thereof is further forward in a tool rotational direction y than a rear end side thereof.

A second aspect of the present invention is configured such that the guide pad 5 has a center line L1 in the width direction thereof inclined at an angle θ of 10 to 40 degrees with respect to a tool axis direction L0 in the deep hole cutting apparatus of the first aspect.

A third aspect of the present invention is configured such that the guide pad 5 has an outer surface constituting a circular arc-shaped surface 5a along a cutting circle S by a cutting blade (outer peripheral side cutting blade 2A) in the deep hole cutting apparatus of the first or second aspect.

### [Effects of the Invention]

According to the deep hole cutting apparatus in accordance with the fist aspect of the present invention, the guide pad brazed on the outer periphery of the cutting head portion is slantingly arranged in such a manner that the tool distal end side thereof is further forward in the tool rotational direction than the rear end side thereof. As a result, an abraded area is not biased on the outer surface of the guide pad even if an abrasion center on the surface of the guide pad is shifted further backward in the tool rotational direction apart from the tool distal end. The guide pad as a whole equally press contacts with inner circumferential surface of the cutting hole, whereupon stress by the pressed contact is turned toward the tool center. This leads to stabilization of cutting states and an improvement of working accuracy. Additionally, equalization of abrasion extends the service life of the guide pad itself.

According to the second aspect of the present invention, the guide pad has its center line in the width direction inclined at an appropriate angular range relative to the tool axis direction, so that the inclination direction comes closer to an inclination direction of the abrasion center involved in the work, thereby further enhancing working accuracy.

According to the third aspect of the present invention, the outer surface of the guide pad constitutes a circular arc-shaped surface along the cutting circle. The circular arc-shaped surface can be formed easily and accurately by being ground after a raw material tip for the guide pad is brazed on the cutting head portion.

### [Brief Description of the Drawings]

FIG. 1 illustrates a drill head used in a deep hole cutting apparatus in accordance with an embodiment of the present invention; FIG. 1A is a plan view, FIG. 1B is a front view of the whole and FIG. 1C is a side view of a cutting head portion.
FIG. 2 illustrates a head body of the drill head; FIG. 2A is a plan view and FIG. 2B is a side view of the cutting head portion.
FIG. 3 illustrates a perspective view of a raw material tip for a guide pad to be brazed on the head body.
FIG. 4 illustrates the head body having been brazed with the raw material tips for guide pads and cutting blades; FIG. 4A is a plan view and FIG. 4B is a side view.
FIG. 5 illustrates a plan view showing a main part of the cutting head portion after the guide pad is ground.
FIG. 6 illustrates a drill head used in a conventional deep hole cutting apparatus; FIG. 6A is a plan view, FIG. 6B is a front view of the whole and FIG. 6C is a side view of a cutting head portion.
FIG. 7 illustrates deep-hole drilling work by a deep hole cutting apparatus; FIG. 7A is a longitudinal sectional side view and FIG. 7B is a longitudinal sectional side view showing a cutting head side in an enlarged manner.

### [Description of Symbols]

- 1A: Drill head
- 10a: Cutting head portion
- 18: Pad mounting depression
- 2A to 2C: Cutting blades
- 5: Guide pad
- 5a: Circular arc-shaped surface
- 50: Raw material tip for guide pad
- H: Cutting hole
- L0: Tool axis direction
- L2: Bisector in width direction
- S: Cutting circle
- y: Tool rotational direction
- θ: Angle

### [Best mode for Carrying Out the Invention]

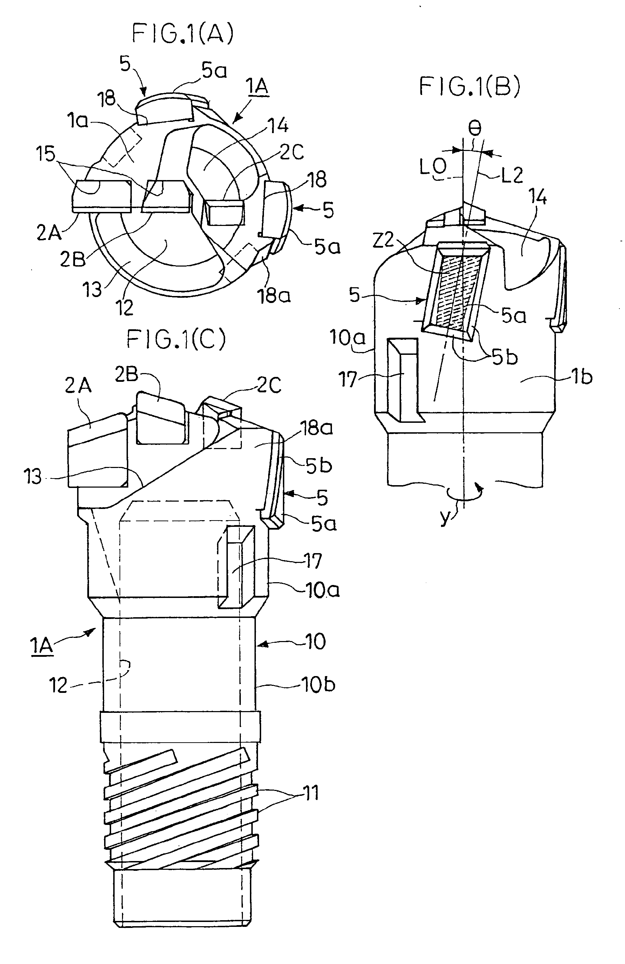

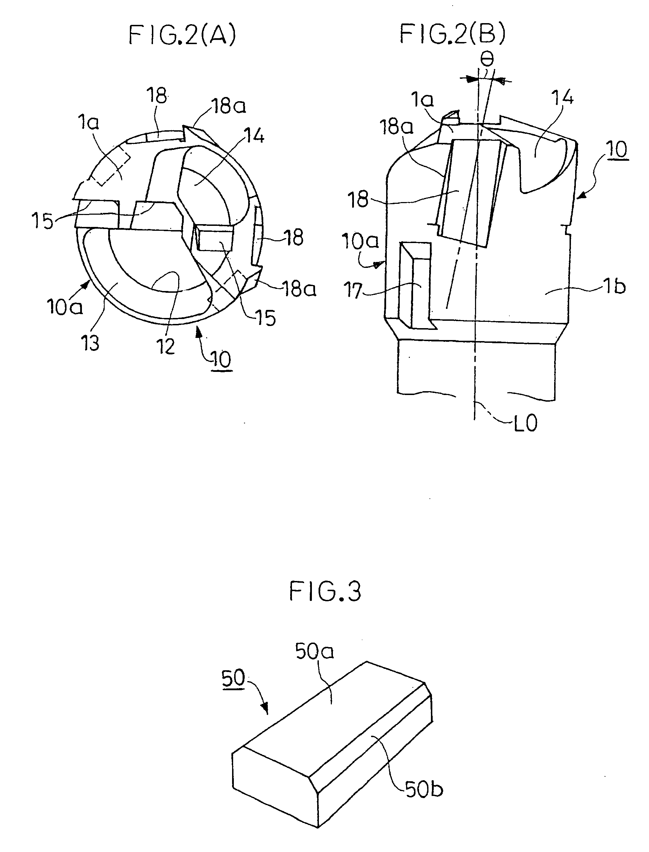

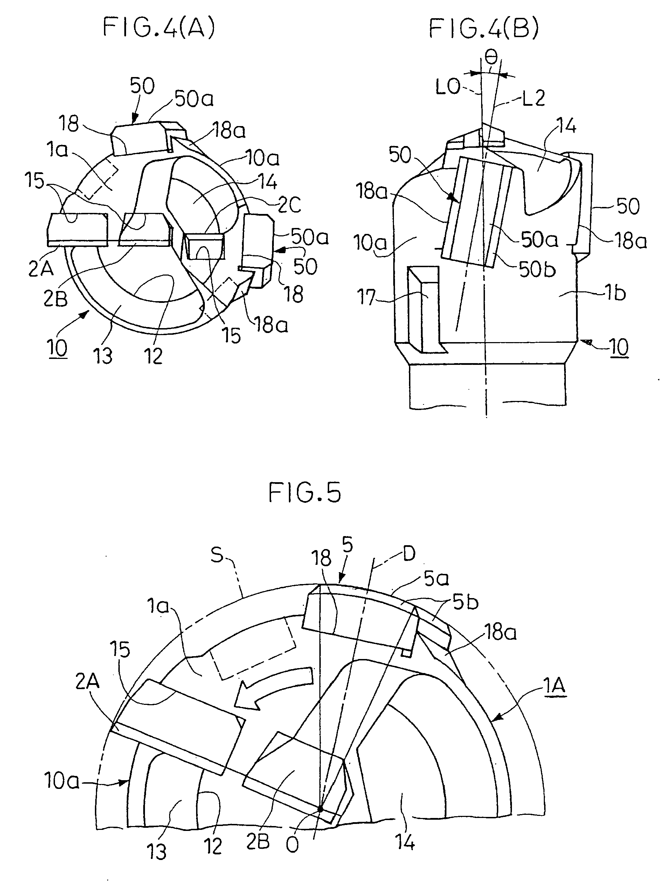

Hereinafter, an embodiment of a deep hole cutting apparatus in accordance with the present invention is described in detail with reference to the drawings. FIGS. 1A to 1C illustrate a drill head 1A in the deep hole cutting apparatus of the embodiment. FIGS. 2A to 2B illustrate a head body 10 of the drill head 1A. FIG. 3 illustrates a raw material tip 50 for a guide pad used in the drill head 1A. FIGS. 4A to 4B illustrate the raw material tip 50 in a brazed state on the head body 10. FIG. 5 illustrates a main part on a distal end surface of the drill head 1A after the raw material tip 50 is ground. In the deep hole cutting apparatus of the embodiment, the drill head 1A has exactly the same fundamental structure as the aforementioned conventional drill head 1B shown in FIGS. 6A to 6C except for forms of guide pads 5 and pad mounting depressions 18. Accordingly, common components between the drill heads 1A and 1B are denoted by the same reference symbols, and their explanations are omitted.

In the drill head 1A, as shown in FIGS. 1A to 1C, two substantially semicylindrical guide pads 5 composed of a hard material such as cemented carbide, cermet and the like are fixed in respective locations on an outer peripheral surface of the cutting head portion 10a, with a convex curved surface of each guide pad 5 facing outward. The guide pad 5 is also slantingly arranged in such a manner that a tool distal end which is one of the ends in the longitudinal direction thereof is further forward in the tool rotational direction y than a rear end which is the other end. A bisector L2 in the width direction of each guide pad 5 is inclined relative to the tool axis direction L0 at the same angle θ with the abrasion center line L1 (see FIG. 6C) of the guide pad 7 in the aforementioned conventional drill head 1B.

This kind of guide pad 5 is configured by brazing a raw material tip 50 for a guide pad as shown in FIG. 3 on a pad mounting depression 18 provided on an outer peripheral surface 1b of a head body 10 shown in FIGS. 2A and 2B and thereafter grinding an outer surface of the raw material tip 50.

The pad mounting depression 18 is formed into a shallow groove which extends from the distal end surface 1a to the front half of the outer peripheral surface 1b of the head body 10. The groove also extends along an inclination direction forming an angle θ with the tool axis direction L0 as corresponding to the slanting arrangement of the guide pad 5. The pad mounting depression 18 has a backward side edge in the tool rotational direction y which renders an outward protruding amount large as a receiving portion 18a. On the other hand, the raw material tip 50 assumes a thick strip shape whose main surface 50a on one side has both side edges provided with chamfering 50b. A cutting margin relative to a final dimensional shape of the guide pad 5 is provided on the main surface 50a which is mainly made into an outer surface after brazing.

Grinding work to form the circular arc-shaped surface 5a of the guide pad 5 may be carried out by a rotational grinding method of rotatingly driving the head body 10 having been brazed with the raw material tip 50 or a grinding tool, with a shaft center O of the head body 10 at the center, thereupon contacting the grinding tool to the main surface 50a of the raw material tip 50. As shown in FIG. 5, the circular arc-shaped surface 5a is designed to have a circular arc along the cutting circle S by the outer peripheral side cutting blade 2A. An end 50c on the tool distal end side of the raw material tip 50 obliquely protrudes from the distal end surface 1a of the head body 10 due to the slanting arrangement of the raw material tip 50, as shown in FIG. 4B. Thus, the protruding area is grindingly removed so as to be substantially flush with the distal end surface 1a. Additionally, a periphery of the outer surface (a periphery of the circular arc-shaped surface 5a) of the guide pad 5 is grindingly chamfered 5b in order to prevent a bite into the inner circumference of the cutting hole H.

The cutting blades 2A to 2C are also brazed on respective cutting blade mounting seats 15 of the head body 10 at about the same time. Especially for an outer edge of the outer peripheral side cutting blade 2A which determines a cutting diameter, a predetermined blade edge position is to be configured with high accuracy by the same post-brazing grinding.

The drill head 1A thus configured is provided for required deep-hole drilling work as the screw shank portion 10b is threadedly inserted and coupled to the distal end of the tool shank 4 in the same manner as the drill head 1B of the drill for deep-hole cutting (see FIGS. 7A and 7B) , as mentioned above. Each guide pad 5 slidingly contacts with the inner circumference of the cutting hole H during the deep-hole drilling work, whereby cutting reaction force is received on the inner circumferential surface of the cutting hole H via the guide pad 5. Additionally, unevenness on the inner circumference of the hole involved in cutting is smoothed. However, abrasion is caused on the outer surface of the guide pad 5 due to slide contact with the inner circumference of the cutting hole H. The center of the abraded area is shifted further backward in the tool rotational direction y apart from the tool distal end.

The guide pad 5 brazed on the outer periphery of the cutting head portion 10a is slantingly arranged in the deep hole cutting apparatus. The direction of the slanting arrangement, that is, the direction of the bisector L2 in the width direction, is coincident with the inclination direction of the abrasion center. As shown by hatching in dotted lines in FIG. 1B, the abraded area Z2 appears equally at both sides of the bisector L2 in the width direction. Thus, the guide pad 5 as a whole equally contacts with the inner circumferential surface of the cutting hole H during the cutting work. Stress by pressed contact to the inner circumference of the cutting hole H is turned toward the tool center. Accordingly, an ideal burnishing action can be exhibited, and high working accuracy resulting from a highly stable cutting state can be obtained. Such equalization of abrasion extends the service life of the guide pad 5 itself. The abraded area Z2 of the guide pad 5 is reduced in width apart from the tool distal end in FIG. 1B. This is because the cutting head portion 10a of the drill head 1A is generally configured into a slightly club-shaped and tapered as a whole.

It is preferable that an angle θ between the tool axis direction L0 and the bisector L2 in the width direction of the slantingly arranged guide pad 5 is in the range of 10 to 40 degrees in general although an optimum range varies in accordance with a tool diameter (a cutting hole diameter) and cutting conditions. More specifically, the guide pad 5 is rendered difficult to be brought into contact with the inner circumferential surface of the cutting hole H equally if the angle θ is too small or too large. A direction of stress by pressed contact is deviated from the tool center, whereupon the cutting state is rendered difficult to be stabilized. For the purpose of an optimum slanting arrangement of the guide pad 5, it is preferable to check an inclination of the abrasion center line under working conditions to be handled beforehand and then set the guide pad at an arrangement angle corresponding to the inclination.

The circular arc-shaped surface 5a of the guide pad 5 is finished by grinding work after the raw material tip 50 is brazed on the cutting head portion 10a as described above. This is due to a problem of positional accuracy unique to the brazing and the special circumstances of the slantingly arranged guide pad 5. More specifically, a brazing material intervenes between adherend surfaces in the brazing, so that precise positional accuracy on the cutting head portion 10a cannot be secured even if the raw material tip 50a itself is finished into an accurate dimensional shape in advance. In order that the guide pad 5 is slantingly arranged relative to the axis direction of the cutting head portion 10a and also the circular arc-shaped surface 5a has its circular arc center on the diameter of the cutting head portion 10a (the tool center O in the embodiment), the circular arc-shaped surface 5a needs to be a curved surface non-parallel to the bottom surface or both side faces of the guide pad 5. Consequently, excessively hard processing operation is forced at the tip level. According to the post-brazing grinding, however, those problems can be resolved all at once.

A guide pad used in the deep hole cutting apparatus of the present invention includes a variety of guide pads varying in length-width ratio from the one exemplified in the aforementioned embodiment. In order to dispense with grinding removal of the protruding end at the tool distal end, the following may be used as the raw material tip for the guide pad; a raw material tip having a dimension in which the protruding end does not project when brazed on the pad mounting depression even if rectangular when viewed from the front, a raw material tip formed as a molded material in advance in which the protruding end is directed along the distal end surface of the mounting head at the time of brazing, a raw material tip in a shape of a parallelogram when viewed from the front in which both ends are along the distal end surface of the mounting head at the time of brazing. In addition to being composed of a hard material such as cemented carbide, cermet and the like entirely, the guide pad may be configured by using a hard material only for the surface which is subjected to slide contact with the inner circumference of the cutting hole and an inexpensive material such as common steel for other parts as a base.

In the embodiment, the drill head 1 provided with three cutting blades 2A to 2C of an outer peripheral side, central and intermediate ones on the cutting head portion 10a thereof is exemplified. However, the present invention is applicable to a case where the number of cutting blades on the cutting head portion is one, two or four or more. The present invention can also be applied to a deep hole cutting apparatus in which a cutting head portion is integrally formed with a tool shank without being independent as a drill head. Furthermore, in a case where the cutting head portion constitutes an independent component as a drill head, a coolant internal supply system (double tube system) may be employed instead of the coolant external supply system (single tube system) as shown in FIG. 7. The internal supply system is configured such that the drill head is connected to a double-tube tool shank, a coolant is delivered from a coolant supply passage between inner and outer cylinders of the tool shank to the outside of the drill head and then the delivered coolant is, together with chips, flown from a coolant discharging port of the drill head to a coolant discharging passage within the inner cylinder of the tool shank.

## Claims

1. A deep hole cutting apparatus comprising:
a drill head portion with an outer periphery; and
a guide pad brazed on the outer periphery of the drill head portion and slidingly contacting with an inner circumference of a cutting hole,
wherein the guide pad is slantingly arranged in such a manner that a tool distal end side thereof is further forward in a tool rotational direction than a rear end side thereof.

2. The deep hole cutting apparatus according to Claim 1, wherein the guide pad has a center line in a width direction inclined at an angle of 10 to 40 degrees with respect to a tool axis direction.

3. The deep hole cutting apparatus according to Claim 1 or 2, wherein the guide pad has an outer surface constituting a circular arc-shaped surface along a cutting circle by a cutting blade.
